# FASCICULE DE BREVET EUROPEEN

(11) **EP 1 308 648 B1**
(45) Date de publication et mention de la délivrance du brevet: **02.02.2005**
(21) Numéro de dépôt: 02292771.9
(22) Date de dépôt: 06.11.2002
(51) Int. Cl.: F16H 57/04

(54) **Boîte de vitesses comportant des moyens auxiliaires de lubrification**
Getriebe mit Zusatzeinrichtungen zur Schmierung
Gear box with auxiliary means for lubrication

(30) Priorité: 06.11.2001 FR 0114309
(43) Date de publication de la demande: 07.05.2003
(73) Titulaire: Renault s.a.s., 92100 Boulogne Billancourt (FR)
(72) Inventeur: Germain, Arnaud, 91120 Palaiseau (FR); Lapeyronie, Julien, 78760 Jouars Ponchartrain (FR)

(56) Documents cités:
- FR-A- 2 780 131
- GB-A- 681 298
- US-A- 4 495 831
- US-A- 5 158 152

## Description

L'invention concerne une boîte de vitesses de véhicule automobile.

L'invention concerne plus particulièrement une boîte de vitesses mécanique de véhicule automobile, du type qui comporte un carter creux à l'intérieur duquel sont agencés au moins deux arbres longitudinaux parallèles et des engrenages associés aux arbres, du type dans lequel une première face du carter est destinée à être fixée à un moteur du véhicule et du type dans lequel une deuxième face opposée du carter est destinée à recevoir un couvercle concave à l'intérieur duquel est agencé au moins un engrenage, associé notamment à un rapport de rang élevé, dont un pignon fou est susceptible d'être craboté sur l'arbre qui le porte par l'intermédiaire d'une fourchette dont au moins deux patins sont reçus dans une gorge périphérique d'un baladeur d'actionnement d'un moyen de synchronisation dudit pignon fou. Une telle boîte de vitesses est connue de FR 2 780 131 A, par exemple.

On connaît de nombreux exemples de boîtes de véhicule mécaniques de ce type, implantées transversalement par rapport au véhicule.

Dans une telle boîte, la lubrification des patins de la fourchette du rapport dont les pignons fixe et fou sont agencés à l'intérieur du couvercle, par exemple les patins de la fourchette assurant l'engagement du cinquième rapport de marche avant, est conventionnellement assurée par l'intermédiaire d'une goulotte qui puise l'huile dans le carter de la boîte et qui amène l'huile de lubrification au droit de la fourchette.

Par ailleurs, les patins de fourchette sont généralement réalisés en un matériau plastique qui présente des caractéristiques antifriction.

Cette configuration donne globalement satisfaction lorsque le véhicule est placé dans une configuration de roulage en ligne droite.

En revanche, lorsque le véhicule entre dans une configuration de roulage en courbe, il peut advenir que la goulotte ne soit plus alimentée en huile. C'est notamment le cas lorsque le véhicule aborde une courbe longue à haute vitesse et que la force centrifuge entraîne la nappe d'huile contenue dans le carter de boîte du côté opposé à l'entrée d'huile de la goulotte.

Il en résulte un échauffement rapide des patins de fourchette, ce qui provoque leur fusion partielle en l'espace d'un temps réduit, typiquement une vingtaine de secondes.

Ce phénomène peut être encore aggravé lorsque le conducteur du véhicule et le couvercle concave de la boîte sont agencés d'un même côté du véhicule et que le véhicule aborde une longue courbe de ce côté.

Par exemple, si le conducteur et le couvercle concave sont agencés du côté gauche du véhicule, et si le véhicule aborde une longue courbe à gauche, il se peut que le conducteur soit déporté vers la droite par la force centrifuge et prenne appui sur le levier de vitesses, ce qui a pour effet de transmettre un effort aux patins de la fourchette considérée par l'intermédiaire de la tringlerie de boîte.

Cet effort est susceptible de solliciter fortement les patins de la fourchette au contact de la gorge, ce qui augmente encore le frottement et donc, l'usure des patins.

Les conséquences de la destruction des patins peuvent être très pénalisantes pour le fonctionnement de la boîte, puisqu'elles peuvent aller de l'apparition d'un jeu accru de passage du rapport associé à la fourchette jusqu'à la quasi-impossibilité d'engager ce rapport.

De plus, la destruction des patins provoque généralement une pollution de l'huile de boîte par les résidus de matériau antifriction qui sont issus de la destruction des patins, ce qui nuit à la fiabilité de la boîte.

Pour remédier à cet inconvénient, l'invention propose une boîte de vitesse du type décrit précédemment, qui comporte des moyens auxiliaires de lubrification des patins de la fourchette considérée.

Dans ce but, l'invention propose une boîte de vitesse du type décrit précédemment, caractérisée en ce qu'elle comporte au moins un réservoir d'huile, agencé à l'intérieur du couvercle, dont un premier orifice de remplissage est susceptible, dans une configuration de roulage en ligne droite du véhicule, de remplir le réservoir d'huile en provenance du carter, et dont un second orifice de lubrification, agencé à proximité d'un des patins de fourchette, est susceptible, dans une configuration de roulage en courbe du véhicule, de vidanger le réservoir pour lubrifier ledit patin de fourchette de manière à éviter sa détérioration.

Selon d'autres caractéristiques de l'invention :
- la fourchette est agencée à proximité d'une face intérieure du couvercle et le réservoir est fixé à ladite face intérieure du couvercle,
- le premier orifice de remplissage comporte une fente qui est agencée dans une face supérieure du réservoir et qui s'étend longitudinalement suivant toute l'épaisseur du réservoir pour permettre le remplissage du réservoir au moyen des projections d'huile qui ruissellent sur la face intérieure du couvercle,
- le premier orifice de remplissage comporte une ouverture, qui prolonge la fente dans une face adjacente à la face supérieure du réservoir, qui est tournée vers le pignon fou, et qui s'étend suivant une partie de l'épaisseur du réservoir pour permettre le remplissage du réservoir au moyen des projections d'huile en provenance du pignon fou,
- le couvercle comporte sur sa face intérieure une nervure qui s'étend sensiblement entre la verticale du pignon fou et la fente du réservoir, pour amener au réservoir les projections d'huile en provenance du pignon fou,
- le réservoir comporte un tube dont une première extrémité est reliée au réservoir et dont la seconde extrémité est agencée à proximité du patin de fourchette dans sa position de rapport engagé pour former le second orifice de lubrification,
- la première extrémité du tube débouche dans le réservoir suivant une cote déterminée agencée en dessous du niveau du premier orifice de remplissage pour déterminer un volume effectif du réservoir,
- la seconde extrémité du tube formant le second orifice de lubrification est agencée au-dessus du patin de fourchette pour permettre l'écoulement de l'huile de lubrification par gravité,
- la taille de l'orifice de remplissage, la taille de l'orifice de lubrification, et le volume effectif du réservoir sont prévus pour permettre un débit d'huile au travers de l'orifice de lubrification pendant au moins 45 secondes à partir du début de la configuration de roulage en courbe du véhicule,
- une face du réservoir épouse sensiblement la forme du couvercle.

D'autres caractéristiques et avantages de l'invention apparaîtront à la lecture de la description détaillée qui suit pour la compréhension de laquelle on se reportera aux dessins annexés dans lesquels :
- la figure 1 est une vue fantôme en perspective du couvercle d'une boîte de vitesses selon l'invention,
- la figure 2 est une vue suivant la direction transversale du réservoir de la boîte de vitesses selon l'invention,
- la figure 3 est une vue fantôme de dessus de l'extrémité côté couvercle d'une boîte de vitesses selon l'invention, et
- la figure 4 est une vue fantôme, suivant la direction longitudinale, de l'extrémité côté couvercle d'une boîte de vitesses selon l'invention.

Dans la description qui va suivre, des chiffres de référence identiques désignent des éléments identiques.

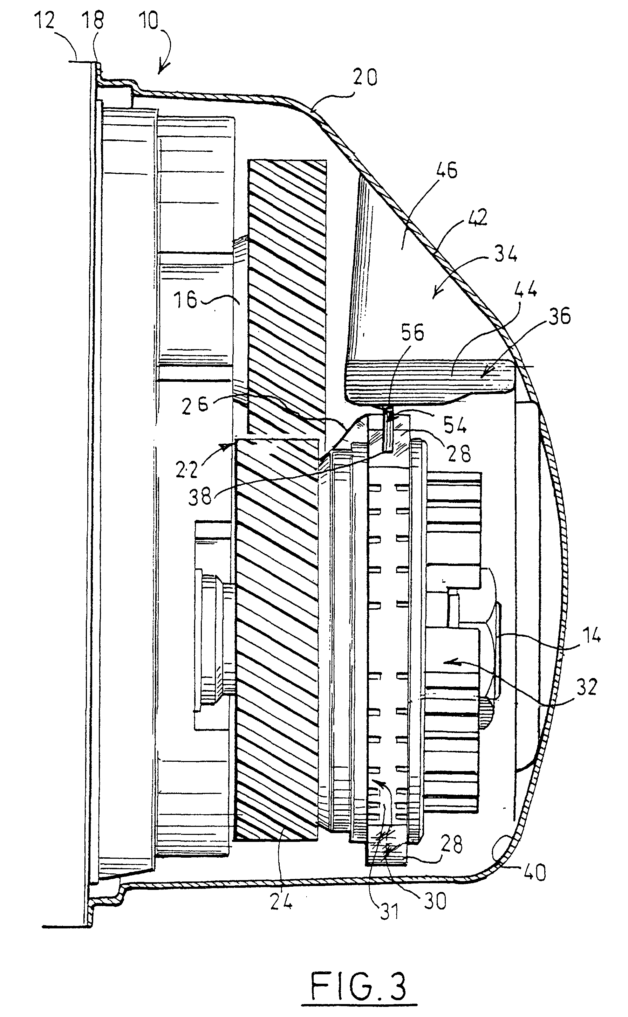

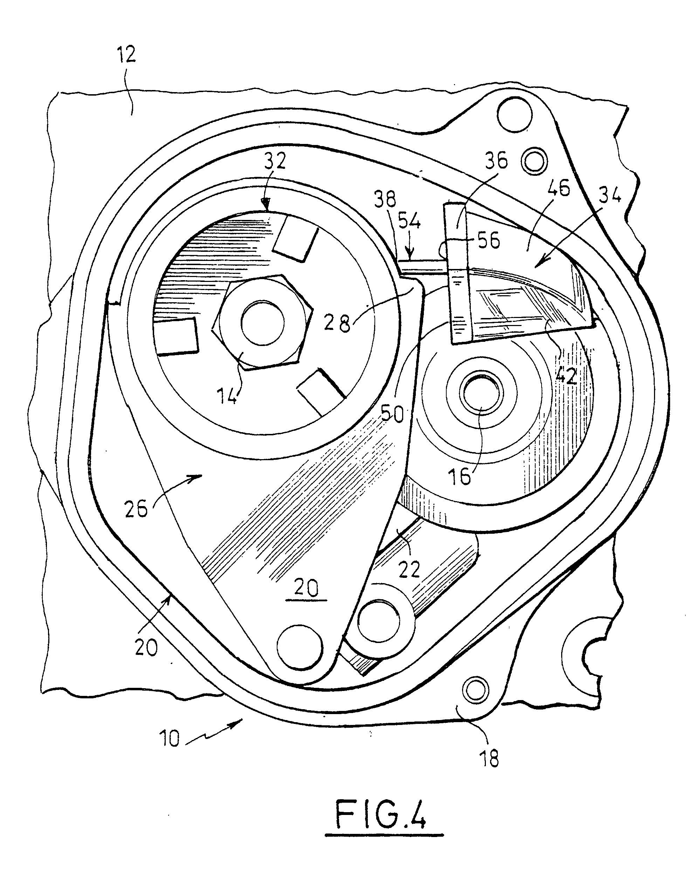

On a représenté aux figures 3 et 4 une boîte de vitesses 10 de véhicule automobile réalisée conformément à l'invention.

De manière connue, la boîte de vitesses 10 comporte un carter creux 12 à l'intérieur duquel sont agencés au moins deux arbres 14 et 16 longitudinaux parallèles et des engrenages associés. Une première face (non représentée) du carter 12 est destinée à être fixée à un moteur (non représenté) du véhicule et une deuxième face 18 opposée du carter est destinée à recevoir un couvercle 20 concave, représenté en vue fantôme sur la figure 3, à l'intérieur duquel est agencé au moins un engrenage 22, par exemple un engrenage associé à un rapport de rang élevé tel qu'un cinquième rapport de marche avant.

L'engrenage 22 comporte un pignon fou 24 qui est susceptible d'être craboté sur l'arbre 14 qui le porte par l'intermédiaire d'un moyen 32 de synchronisation qui est susceptible d'être actionné l'intermédiaire d'un baladeur 30 mû axialement par une fourchette 26. A cet effet, des patins 28 de la fourchette 26 sont reçus dans une gorge 31 périphérique du baladeur 30.

Conformément à l'invention, pour garantir une lubrification adéquate d'un des patins 2-8 quell-e que soit la configuration de roulage du véhicule, la boîte 10 comporte au moins un réservoir d'huile 34, qui est agencé à l'intérieur du couvercle 20, et qui est destiné à assurer une lubrification auxiliaire. Plus précisément un premier orifice 36 de remplissage du réservoir 34 est susceptible, dans une configuration de roulage en ligne droite du véhicule, de remplir le réservoir 34 avec de l'huile en provenance du carter 12, et un second orifice 38 de lubrification, agencé à proximité d'un des patins 28 de la fourchette 26, est susceptible, dans une configuration de roulage en courbe du véhicule, de vidanger le réservoir 34 pour lubrifier ledit patin 28 de la fourchette 26 de manière à éviter sa détérioration.

Il sera compris que le réservoir 34 est destiné à se vidanger en continu. Dans un configuration de roulage en ligne droite, le réservoir 34 est destiné à se remplir plus vite qu'il ne peut se vidanger, alors que dans une configuration de roulage en courbe, il est destiné à se vidanger de manière à assurer la lubrification du patin 28.

Avantageusement, la lubrification du patin 28 qui est agencé à proximité du second orifice 38 de lubrification permet d'assurer une lubrification de la gorge 31 du baladeur 30 et d'assurer ainsi la lubrification de l'autre patin 28.

Dans le mode de réalisation préféré de l'invention, qui a notamment été représenté à la figure 3, la fourchette 26 est agencée à proximité d'une face intérieure 40 du couvercle 20. De ce fait, le réservoir 34 est lui aussi agencé au moins à proximité de la face intérieure 40, et il est de préférence accolé à cette face intérieure 40.

Cette disposition n'est pas limitative de l'invention, et il sera compris que le réservoir 34 est de préférence placé à proximité de la fourchette 26, quelle que soit la façon dont elle est disposée dans la boîte.

De préférence, le réservoir 34 doit être agencé à l'opposé de la goulotte d'alimentation en huile par rapport aux patins de fourchette 28. Il peut alors se vidanger dans les courbes à gauche lorsque la goulotte n'apporte plus d'huile aux patins 28.

De plus, dans le mode de réalisation préféré de l'invention, le réservoir 34 est fixé à la face intérieure 40 du couvercle 20.

Dans le cadre d'une construction en grande série, on pourra envisager que le réservoir 34 soit, par exemple, métallique et qu'il soit soudé sur la face intérieure 40 du couvercle 20, ou bien on pourra envisager que le réservoir 34 soit réalisé en un matériau plastique et qu'il soit collé sur la face intérieure 40 du couvercle 20.

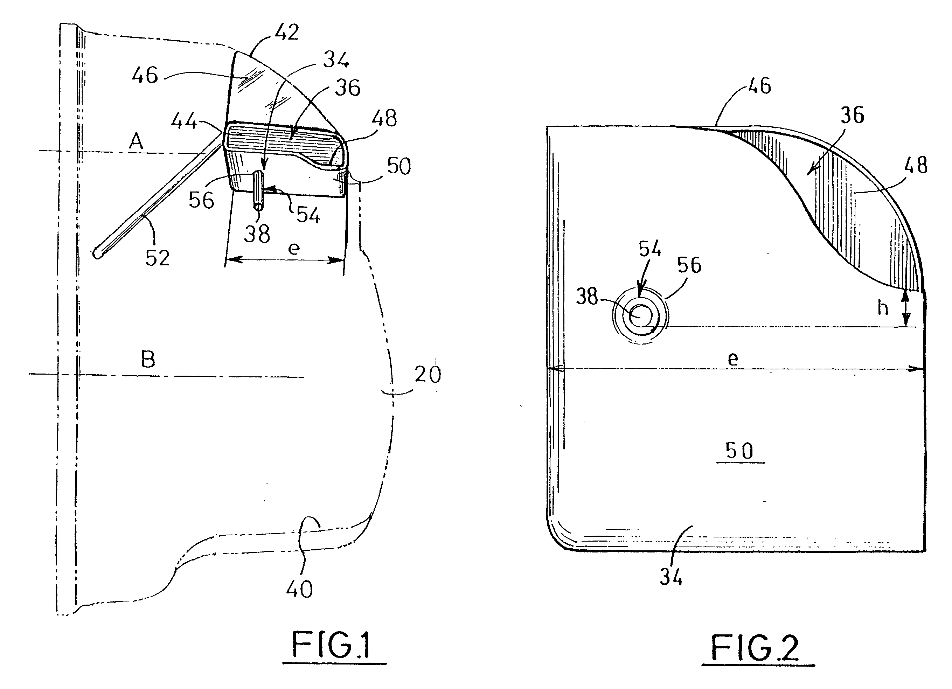

Les figures 1 et 2 détaillent plus précisément les formes du réservoir 34.

Pour des raisons d'encombrement et éventuellement de fixation, une face 42 du réservoir 34 épouse sensiblement la forme de la face intérieure 40 du couvercle 20.

Comme l'illustre la figure 1, le premier orifice 36 de remplissage comporte une fente 44 qui est agencée dans une face supérieure 46 du réservoir 34 et qui s'étend longitudinalement suivant toute l'épaisseur "e" du réservoir 34 pour permettre le remplissage du réservoir 34 au moyen des projections d'huile qui ruissellent sur la face intérieure 40 du couvercle 20.

Par ailleurs, le premier orifice 36 de remplissage comporte une ouverture 48, qui prolonge la fente 44 dans une face 50 adjacente à la face supérieure 46 du réservoir 34, qui est tournée vers le pignon fou 24 qui a été représenté à la figure 3, et qui s'étend suivant une partie de l'épaisseur "e" du réservoir 34 pour permettre le remplissage du réservoir 34 au moyen des projections d'huile en provenance du pignon fou 24.

De plus, comme l'illustre la figure 1 sur laquelle on a figuré l'axe A de l'arbre 16 et l'axe B de l'arbre 14 qui porte le pignon fou 24 précédemment évoqué, le couvercle 20 comporte sur sa face intérieure 40 une nervure 52 qui s'étend sensiblement entre la verticale du pignon fou et la fente 44-du réservoir 34. Cette nervure permet avantageusement d'amener au réservoir 34 les projections d'huile en provenance du pignon fou.

On pourra avantageusement prévoir que, dans une configuration de roulage à plat du véhicule, cette nervure 52 soit légèrement inclinée par rapport à l'horizontale en direction de la fente 44 pour faciliter le remplissage du réservoir 34.

Par ailleurs, comme l'illustre la figure 4, le réservoir 34 comporte un tube 54 dont une première extrémité 56 est reliée au réservoir 34 et dont la seconde extrémité 38 est agencée à proximité du patin 28 de fourchette pour former le second orifice de lubrification.

Comme l'illustre la figure 2, la première extrémité 56 du tube 54 débouche dans le réservoir 34 en dessous du niveau du premier orifice 36 de remplissage.

Comme l'illustre la figure 2, la première extrémité 56 du tube 54 est agencée à une cote "h" en dessous du niveau du premier orifice 36 de remplissage. Cette cote "h" détermine le volume effectif d'huile qui peut être utilisé pour assurer la lubrification du patin de fourchette lorsque le véhicule est dans une configuration de roulage en courbe.

Il sera compris que pour assurer une lubrification sensiblement continue, la taille de l'orifice 36 de remplissage, la taille de l'orifice 38 de lubrification, et le volume effectif du réservoir 34 compris entre la première extrémité 56 du tube 54 et le niveau du premier orifice 36 de remplissage suivant la cote "h" sont prédéterminés en fonction des besoins de lubrification du patin de fourchette. A titre d'exemple, et de manière non limitative de l'invention, les orifices 36, 38 et le volume effectif seront prévus pour permettre un débit d'huile au travers de l'orifice 38 de lubrification pendant au moins 45 secondes à partir du début de la configuration de roulage en courbe du véhicule, ce qui correspond à la durée maximale généralement constatée pendant laquelle le véhicule est susceptible de prendre une courbe longue prise à grande vitesse, ce qui peut advenir par exemple lors d'un parcours autoroutier. Par exemple, on pourra prévoir un volume effectif du réservoir 34 qui est de l'ordre de 15 ml.

Enfin, comme l'illustre la figure 4, il sera compris que la seconde extrémité 38 du tube 54 formant le second orifice de lubrification est agencée au-dessus du patin 28 de fourchette dans sa position de rapport engagé pour permettre l'écoulement de l'huile de lubrification par gravité.

L'invention permet d'assurer une lubrification optimale du patin 28 de fourchette et d'assurer sa durabilité.

## Revendications

1. Boîte de vitesses (10) mécanique de véhicule automobile, du type qui comporte un carter (12) creux à l'intérieur duquel sont agencés au moins deux arbres (14, 16) longitudinaux parallèles et des engrenages associés aux arbres (14, 16), du type dans lequel une première face du carter (12) est destinée à être fixée à un moteur du véhicule et du type dans lequel une deuxième face (18) opposée du carter (12) est destinée à recevoir un couvercle (20) concave à l'intérieur duquel est agencé au moins un engrenage (22), associé notamment à un rapport de rang élevé, dont un pignon fou (24) est susceptible d'être craboté sur l'arbre (14) qui le porte par l'intermédiaire d'une fourchette (26) dont deux patins (28) sont reçus dans une gorge (31) périphérique d'un baladeur (30) d'actionnement d'un moyen (32) de synchronisation dudit pignon fou (24),
**caractérisée en ce qu'**elle comporte au moins un réservoir (34) d'huile, agencé à l'intérieur du couvercle (20), dont un premier orifice (36) de remplissage est susceptible, dans une configuration de roulage en ligne droite du véhicule, de remplir le réservoir (34) avec de l'huile en provenance du carter (12), et dont un second orifice (38) de lubrification, agencé à proximité d'un des patins (28) de fourchette, est susceptible, dans une configuration de roulage en courbe du véhicule, de vidanger le réservoir (34) pour lubrifier ledit patin (28) de fourchette de manière à éviter sa détérioration.

2. Boîte de vitesses (10) selon la revendication précédente, **caractérisée en ce que** la fourchette (26) est agencée à proximité d'une face intérieure (40) du couvercle (20) et **en ce que** le réservoir (34) est fixé à ladite face intérieure (40) du couvercle (20).

3. Boîte de vitesses (10) selon la revendication précédente, **caractérisée en ce que** le premier orifice (36) de remplissage comporte une fente (44) qui est agencée dans une face supérieure (46) du réservoir (34) et qui s'étend longitudinalement suivant toute l'épaisseur (e) du réservoir (34) pour permettre le remplissage du réservoir (34) au moyen des projections d'huile qui ruissellent sur la face intérieure (40) du couvercle (20).

4. Boîte de vitesses (10) selon la revendication précédente, **caractérisée en ce que** le premier orifice (36) de remplissage comporte une ouverture (48), qui prolonge la fente (44) dans une face (50) adjacente à la face supérieure (46) du réservoir (34), qui est tournée vers le pignon fou (24), et qui s'étend suivant une partie de l'épaisseur (e) du réservoir (34) pour permettre le remplissage du réservoir (34) au moyen des projections d'huile en provenance du pignon fou (24).

5. Boîte de vitesses (10) selon la revendication précédente, **caractérisée en ce que** le couvercle (20) comporte sur sa face intérieure (40) une nervure (52) qui s'étend sensiblement entre la verticale du pignon fou (24) et la fente (44) du réservoir (34), pour amener au réservoir les projections d'huile en provenance du pignon fou (24).

6. Boîte de vitesses (10) selon l'une des revendications 2 à 5, **caractérisée en ce que** le réservoir(34) comporte un tube (54) dont une première extrémité (56) est reliée au réservoir (34) et dont la seconde extrémité est agencée à proximité du patin (28) de fourchette dans sa position de rapport engagé pour former le second orifice (38) de lubrification.

7. Boîte de vitesses (10) selon la revendication précédente, **caractérisée en ce que** la première extrémité (56) du tube débouche dans le réservoir (34) suivant une cote (h) déterminée agencée en dessous du niveau du premier orifice (36) de remplissage pour déterminer un volume effectif du réservoir (34).

8. Boîte de vitesses (10) selon l'une des revendications 6 ou 7, **caractérisée en ce que** la seconde extrémité du tube formant le second orifice (38) de lubrification est agencée au-dessus du patin (28) de fourchette pour permettre l'écoulement de l'huile de lubrification par gravité.

9. Boîte de vitesses (10) selon l'une quelconque des revendications précédentes, **caractérisée en ce que** la taille de l'orifice (36) de remplissage, la taille de l'orifice (38) de lubrification, et le volume effectif du réservoir (34) sont prévus pour permettre un débit d'huile au travers de l'orifice (38) de lubrification pendant au moins 45 secondes à partir du début de la configuration de roulage en courbe du véhicule.

10. Boîte de vitesses (10) selon l'une quelconque des revendications 2 à 9, **caractérisée en ce qu'**une face (42) du réservoir épouse sensiblement la forme du couvercle (20).

## Patentansprüche

1. Mechanisches Kraftfahrzeuggetriebe (10), von dem Typ, welcher ein Hohlgehäuse (12) umfasst, in dessen Innerem wenigstens zwei longitudinale parallele Arme (14, 16) angeordnet sind und Räderwerke, die den Armen (14,16) zugeordnet sind, von dem Typ, in welchem eine erste Seite des Gehäuses (12) dazu bestimmt ist, an einem Motor des Fahrzeugs befestigt zu sein und von dem Typ, in welchem eine zweite gegenüberliegende Seite (18) des Gehäuses (12) dazu bestimmt ist, eine konkave Abdeckung (20) zu empfangen, in deren Innerem wenigstens ein Räderwerk (22) angeordnet ist, insbesondere zugeordnet zu einem Gang von erhöhtem Rang, von dem ein bewegliches Zahnrad (24) geeignet ist, auf dem Arm (14), der es trägt vermittels einer Gabel (26), von der zwei Stege (28) in einer peripheren Vertiefung (31) einer Schubwelle (30) der Betätigung durch ein Synchronisationsmittel (32) des beweglichen Zahnrads (24), formschlüssig zu sein,
**dadurch gekennzeichnet, dass** es wenigstens ein Ölreservoir (34) umfasst, angeordnet im Inneren der Abdeckung (20), von dem eine erste Öffnung (36) des Befüllens geeignet ist, in einer Konfiguration des Geradeausfahrens des Fahrzeugs, das Reservoir (34) mit Öl, das von dem Gehäuse (12) kommt, zu befüllen, und von dem eine zweite Öffnung (38) des Schmierens, angeordnet in Nähe einer der Stege (28) der Gabel, geeignet ist, in einer Konfiguration des Kurvenfahrens des Fahrzeugs das Reservoir (34) zu entleeren, um den Steg (28) der Gabel zu entleeren, um dessen Schädigung zu vermeiden.

2. Getriebe (10) nach dem vorhergehenden Anspruch, **dadurch gekennzeichnet, dass** die Gabel (26) in Nähe einer inneren Seite (40) der Abdeckung (20) angeordnet ist, und dadurch, dass das Reservoir (34) an die innere Seite (40) der Abdeckung (20) befestigt ist.

3. Getriebe (10) nach dem vorhergehenden Anspruch, **dadurch gekennzeichnet, dass** die erste Öffnung (36) des Befüllens einen Spalt (44) umfasst, der in einer oberen Seite (46) des Reservoirs (34) angeordnet ist, und welcher sich longitudinal der gesamten Stärke (e) des Reservoirs (34) folgend erstreckt, um die Befüllung des Reservoirs (34) vermittels Ölschwällen, die über die innere Seite (40) der Abdeckung (20) rinnen, zu erlauben.

4. Getriebe (10) nach dem vorhergehenden Anspruch, **dadurch gekennzeichnet, dass** die erste Öffnung (36) des Befüllens eine Öffnung (48) umfasst, welche den Spalt (44) in eine der oberen Seite (46) des Reservoirs (34) benachbarte Seite (50) verlängert, die dem beweglichen Zahnrad (24) zugewandt ist, und welche sich gemäß einem Abschnitt der Stärke (e) des Reservoirs (34) erstreckt, um die Befüllung des Reservoirs (34) vermittels Ölschwällen, die von dem beweglichen Zahnrad (24) kommen, zu erlauben.

5. Getriebe (10) nach dem vorhergehenden Anspruch, **dadurch gekennzeichnet, dass** die Abdeckung (20) auf ihrer Innenseite (40) eine Rille (52) umfasst, welche sich im Wesentlichen zwischen der Vertikalen des beweglichen Zahnrads (24) und dem Spalt (44) des Reservoirs (34) erstreckt, um dem Reservoir die Ölschwälle, die von dem beweglichen Zahnrad (24) kommen, zuzuführen.

6. Getriebe (10) nach einem der Ansprüche 2 bis 5, **dadurch gekennzeichnet, dass** das Reservoir (34) ein Rohr (54) umfasst, von dem ein erstes Ende (56) mit dem Reservoir (34) verbunden ist und von dem ein zweites Ende in Nähe des Stegs (28) der Gabel in ihrer Position des eingelegten Gangs angeordnet ist, um die zweite Öffnung (38) des Schmierens zu bilden.

7. Getriebe (10) nach dem vorhergehenden Anspruch, **dadurch gekennzeichnet, dass** das erste Ende (56) des Rohrs in das Reservoir (34) gemäß einer bestimmten Höhe (h) mündet, angeordnet unterhalb des Niveaus der ersten Öffnung (36) des Befüllens, um ein effektives Volumen des Reservoirs (34) zu bestimmen.

8. Getriebe (10) nach einem der Ansprüche 6 oder 7, **dadurch gekennzeichnet, dass** das zweite Ende des Rohrs, welches die zweite Öffnung (38) des Schmierens bildet, oberhalb des Stegs (28) der Gabel angeordnet ist, um das Abfließen von Schmieröl durch Schwerkraft zu erlauben.

9. Getriebe (10) nach einem der vorhergehenden Ansprüche, **dadurch gekennzeichnet, dass** die Abmessung der Öffnung (36) des Befüllens, die Abmessung der Öffnung (38) des Schmierens und das effektive Volumen des Reservoirs (34) vorgesehen sind, eine Ölausbringung durch die Öffnung (38) des Schmierens während mindestens 45 Sekunden ausgehend vom Beginn der Konfiguration des Kurvenfahrens des Fahrzeugs zu erlauben.

10. Getriebe (10) nach einem der Ansprüche 2 bis 9, **dadurch gekennzeichnet, dass** eine Seite (42) des Reservoirs im Wesentlichen die Form der Abdekkung (20) anschmiegt.

## Claims

1. A mechanical gearbox (10) of an automobile vehicle of the type comprising a hollow casing (12) within which at least two parallel longitudinal shafts (14, 16) and gears associated with the shafts (14, 16) are arranged, of the type in which a first surface of the casing (12) is adapted to be secured to an engine of the vehicle and of the type in which a second opposing surface (18) of the casing (12) is adapted to receive a concave cover (20) within which at least one gear (22) is arranged, this gear being associated in particular with a ratio of high rank, of which an idler pinion (24) may be positively locked on the shaft (14) which bears it by means of a fork (26) of which two pads (28) are received in a peripheral groove (31) of a sliding shaft (30) actuating a synchronisation means (32) of the idler pinion (24), **characterised in that** it comprises at least one oil tank (34), arranged within the cover (20), a first filling orifice (36) of which may, when the vehicle is travelling in a straight line, fill the tank (34) with oil from the casing (12), and a second lubrication orifice (38) of which, arranged in the vicinity of one of the pads (28) of the fork, may, when the vehicle is travelling round a bend, empty the tank (34) in order to lubricate the fork pad (28) so as to prevent its deterioration.

2. A gearbox (10) as claimed in the preceding claim, **characterised in that** the fork (26) is disposed in the vicinity of an inner surface (40) of the cover (20) and **in that** the tank (34) is secured to this inner surface (40) of the cover (20).

3. A gearbox (10) as claimed in the preceding claim, **characterised in that** the first filling orifice (36) comprises a slot (44) disposed in an upper surface (46) of the tank (34) and extending longitudinally along the whole thickness (e) of the tank (34) in order to enable the tank (34) to be filled by means of the oil sprays running along the inner surface (40) of the cover (20).

4. A gearbox (10) as claimed in the preceding claim, **characterised in that** the first filling orifice (36) comprises an opening (48), which prolongs the slot (44) into a surface (50) adjacent to the upper surface (46) of the tank (34), which faces the idler pinion (24), and which extends along part of the thickness (e) of the tank (34) to enable the tank (34) to be filled by means of the oil sprays from the idler pinion (24).

5. A gearbox (10) as claimed in the preceding claim, **characterised in that** the cover (20) comprises, on its inner surface (40), a rib (52) which extends substantially between the vertical of the idler pinion (24) and the slot (44) of the tank (34), in order to supply the oil sprays from the idler pinion (24) to the tank.

6. A gearbox (10) as claimed in one of claims 2 to 5, **characterised in that** the tank (34) comprises a tube (54), a first end (56) of which is connected to the tank (34) and a second end of which is arranged in the vicinity of the fork pad (28) in its engaged ratio position so as to form the second lubrication orifice (38).

7. A gearbox (10) as claimed in the preceding claim, **characterised in that** the first end (56) of the tube communicates with the tank (34) at a predetermined dimension (h) disposed below the level of the first filling orifice (36) in order to determine an actual volume of the tank (34).

8. A gearbox (10) as claimed in one of claims 6 or 7, **characterised in that** the second end of the tube forming the second lubrication orifice (38) is arranged above the fork pad (28) in order to enable the lubricating oil to flow by gravity.

9. A gearbox (10) as claimed in any one of the preceding claims, **characterised in that** the size of the filling orifice (36), the size of the lubrication orifice (38) and the actual volume of the tank (34) are set so as to enable a flow of oil through the lubrication orifice (38) for at least 45 seconds from the commencement of travel round a bend by the vehicle.

10. A gearbox (10) as claimed in any one of claims 2 to 9, **characterised in that** a surface (42) of the tank substantially matches the shape of the cover (20).
